# EUROPEAN PATENT APPLICATION

(11) **EP 2 431 792 A2**
(43) Date of publication of application: **21.03.2012**
(21) Application number: 10789658.1
(22) Date of filing: 09.06.2010
(51) Int. Cl.: G02F 1/13, C03B 23/22, B26D 3/06, C03B 33/02

(54) **METHOD FOR CUTTING LIQUID CRYSTAL PANEL**

(30) Priority: 16.06.2009 KR 20090053476
(71) Applicant: Tovis Co. Ltd., Yeonsu-gu, Incheon 406-840 (KR)
(72) Inventor: KIM, Yong beom, Incheon 406-736 (KR); KIM, Dong hyun, Incheon 406-793 (KR)
(74) Representative: Manitz, Finsterwald & Partner GbR
(86) International application number: PCT/KR2010/003689
(87) International publication number: WO 2010/147331

(57) **Abstract**

The present invention relates to a method for cutting a liquid crystal display panel. A method for cutting a liquid crystal display panel which includes an upper panel and a lower panel includes: forming scribe lines on the upper panel and the lower panel respectively along a cutting direction; and breaking the upper panel and the lower panel by applying an external force at an outside of the scribe lines in a direction to urge the lower panel to be bent toward an outer surface thereof.

## Description

### CROSS-REFERENCE TO RELATED APPLICATION

This application claims priority to and the benefit of Korean Patent Application No. 10-2009-0053476 filed in the Korean Intellectual Property Office on June 16, 2009, the entire contents of which are incorporated herein by reference.

### [Field of the invention]

The present invention relates to a method for cutting a liquid crystal display panel.

### [Background Art]

Generally, a liquid crystal display (LCD) includes two display panels and a liquid crystal layer disposed therebetween and having a dielectric anisotropy. An electric filed is formed in the liquid crystal layer, and a transmittance of light passing the liquid crystal layer is regulated by regulating amplitude of the electric field so as to obtain a desired image. Such a liquid crystal display is representative one of a flat panel display (FPD), and TFT-LCD which uses thin film transistor (TFT) as a switching element is widely used.

A plurality of display signal lines i.e., gate lines and data lines, a plurality of thin film transistors and pixel electrodes are formed on a lower display panel of the two display panels of the liquid crystal display panel, and a color filter and a common electrode are formed on a upper display panel.

Generally, a liquid crystal display panel has one of some standardized sizes, so use of the liquid crystal panel for various purposes is limited by the standardized size.

In order to overcome this limitation, a technology for cutting a liquid crystal display panel for making a desired size has been introduced.

Generally, scribe lines are formed respectively by a predetermined depth on an upper panel and a lower panel along a cutting direction, and then external force is applied to break the panel at the scribe lines so as to cut the panel.

At this time, if external force to break the panel is applied after the forming of the scribe lines on the upper panel and the lower panel, the upper panel and the lower panel are slightly bent, and during this process, a spacer for maintaining a cell gap which is disposed inside the liquid crystal display panel is momentarily deformed by the bending of the upper panel and the lower panel. An alignment layer of a viewing area of a lower panel near the spacer can be damaged by the momentary deformation of the spacer, and damage of the alignment layer may cause light leakage problem and this may result in an error in the cut liquid crystal display panel.

### [Technical Problem]

The present invention has been made in an effort to provide a method for cutting a liquid crystal display panel in which damages on an alignment layer of a lower panel within a viewing area can be minimized while breaking an upper panel and a lower panel by applying an external force in the process of cutting a liquid crystal display panel.

### [Technical Solution]

According to an exemplary embodiment of the present invention, a method for cutting a liquid crystal display panel which includes an upper panel and a lower panel includes: forming scribe lines on the upper panel and the lower panel respectively along a cutting direction; and breaking the upper panel and the lower panel by applying an external force at an outside of the scribe lines in a direction to urge the lower panel to be bent toward an outer surface thereof.

In the forming the scribe lines, the scribe lines may be respectively formed such that a cut edge of the upper panel is outwardly protruded from a cut edge of the lower panel.

According to another exemplary embodiment of the present invention, in a method for cutting a liquid crystal display panel which includes a lower panel, a lower alignment layer which is formed on the lower panel, an upper panel, an upper alignment layer which is formed below the upper panel, and a spacer which is formed on a lower surface of the upper alignment layer by being patterned thereon such that a lower end thereof contacts the lower alignment layer, scribe lines are formed on the upper panel and the lower panel respectively along a cutting direction, and subsequently the upper panel and the lower panel is broken by applying an external force at an outside of the scribe lines in a direction to urge the lower panel to be bent toward an outer surface thereof.

The scribe lines may be respectively formed such that a cut edge of the upper panel is outwardly protruded from a cut edge of the lower panel.

### [Advantageous Effects]

According to the present invention, since an external force is applied in a direction to urge the lower panel to be bent toward an outer surface thereof to break the upper panel and the lower panel after forming scribe lines on the same, an alignment layer of the lower panel within a viewing area of a liquid crystal display panel which will be obtained by cutting can be prevented from being damaged by the deformation of the spacer which is interposed between the upper panel and the lower panel.

### [Brief Description of Drawings]

FIG. 1 is a perspective view of a liquid crystal display panel to which a method for cutting a liquid crystal display panel according to an embodiment of the present invention may be applied.
FIG. 2 is an equivalent circuit diagram of one pixel of a liquid crystal display of FIG. 1.
FIG. 3 is a cross sectional view of a liquid crystal display panel of a state in which polarizers are stripped and then scribe lines are formed in a liquid crystal display panel of FIG. 1.
FIG. 4 is a drawing for showing deformations of an upper panel, a lower panel and a spacer during the process of breaking the upper panel and the lower panel by applying external force after forming scribe lines in a method of cutting a liquid crystal display panel according to an embodiment of the present invention.
FIG. 5 is a drawing for explaining a process for forming a sealant layer in a method for cutting a liquid crystal display panel according to an embodiment of the present invention.

### [Detailed Descriptions of the Embodiments]

The present invention will now be described more fully hereinafter with reference to the accompanying drawings, in which preferred embodiments of the invention are shown.

In the drawings, the thickness of layers, films, panels, regions, etc. are exaggerated for clarity. Like reference numerals designate like elements throughout the specification. It will be understood that when an element such as a layer, film, region or substrate is referred to as being "on" another element, it can be directly on the other element or intervening elements may also be present. In contrast, when an element is referred to as being "directly on" another element, there are no intervening elements present.

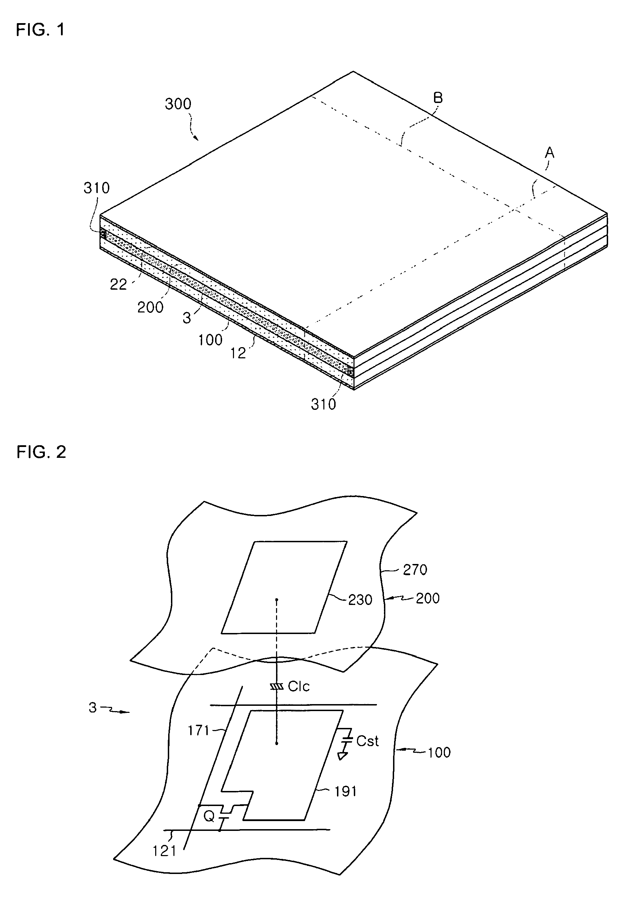

Referring to FIG. 1 to FIG. 3, liquid crystal panel assembly 300 to which a cutting method according to an embodiment of the present invention includes lower and upper panels 100 and 200 which face each other, and a liquid crystal layer 3 which is interposed between panels 100 and 200 and includes liquid crystal molecules which are aligned vertically or horizontally. Lower panel 100 may be referred to as a thin film transistor array panel, and upper panel 200 may be referred to as a color filter array panel.

Meanwhile, not shown in the drawings, liquid crystal display panel 300 may include a plurality of data lines which substantially extend in a column direction and are substantially parallel with each other, gate lines which substantially extend in a row direction and are substantially parallel with each other, and a plurality of pixels which are connected to these lines and are substantially arranged in a matrix shape.

A sealant 310 which is made of material for bonding two panels 100 and 200 and defines a space which is filled with liquid crystal and prevents leak of liquid crystal is formed at edges of two panels 100 and 200, and polarizers 12 and 22 for polarizing light are respectively attached to outer surfaces of two panels 100 and 200. One of polarizers 12 and 22 may be omitted.

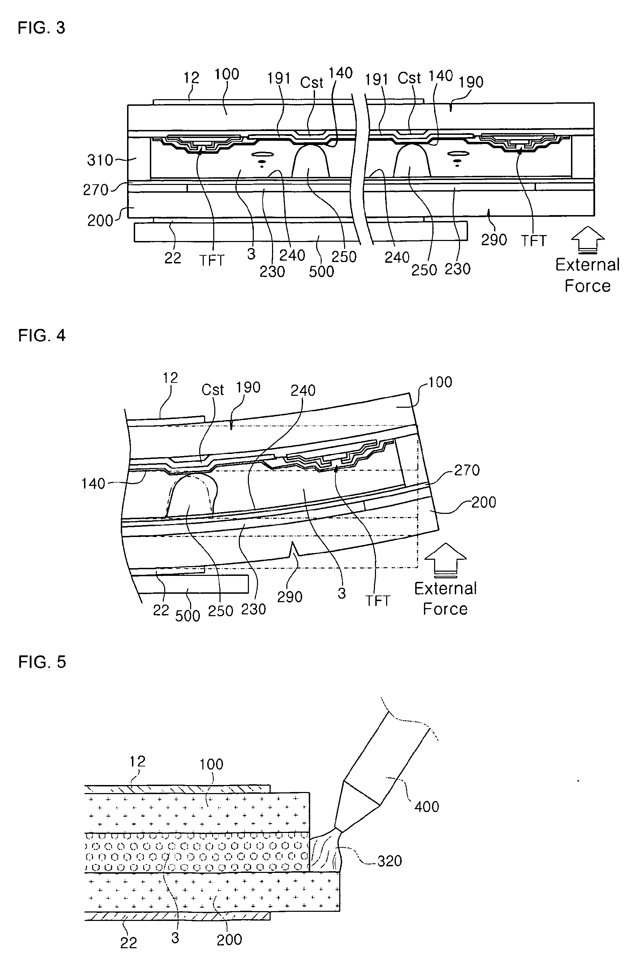

Referring to FIG. 3, a color filter 230 is formed on a lower surface of upper panel 200, a common electrode 270 is formed on a lower surface of color filter 230, and an upper alignment layer 240 is formed on a lower surface of common electrode.

Further, data lines 171, gate lines 121, pixel electrodes 191, thin film transistors TFT, or the like may be formed on an upper surface of lower panel 100, and a lower alignment layer 140 is formed thereon.

As shown in FIG. 3, a spacer 250 for maintaining a cell gap between upper panel 200 and lower panel 100 are interposed between upper panel 200 and lower panel 100.

Spacer 250 is formed by being patterned on a lower surface of upper alignment layer 240 of upper panel 200. That is, space 250 is fixed to upper alignment layer 240 and is pressurized by lower alignment layer 140.

Meanwhile, referring to FIG. 2, each pixel PX includes a switching element Q connected to data line 171 and gate line 121, and a liquid crystal capacitor Clc and a storage capacitor Cst connected thereto. If necessary, storage capacitor Cst may be omitted.

Switching element Q is a three terminal element such as a thin film transistor, etc. provided to lower panel 100, a control terminal thereof is connected to gate line 121, an input terminal thereof is connected to data line 171, and an output terminal thereof is connected to liquid crystal capacitor Clc and storage capacitor Cst.

Liquid crystal capacitor Clc has two terminals of a pixel electrode 191 of lower panel 100 and a common electrode 270 of upper panel 200, and liquid crystal layer 3 between two electrodes 191 and 270 serves as a dielectric material. Pixel electrode 191 is connected to switching element Q, and common electrode 270 is formed on the entire surface of upper panel 200 and a common voltage is applied thereto. Storage capacitor Cst assists liquid crystal capacitor Clc and maintains the data voltage applied to pixel electrode 191 for a predetermined period.

Meanwhile, for realizing color display, each pixel PX uniquely displays one of primary colors (spatial division) or each pixel PX alternately displays primary colors (temporal division) as time lapses, and a desired color is recognized by a spatial and temporal sum of primary colors. Examples of primary colors include three primary colors including red, green, and blue. FIG. 2 shows an example of a spatial division, and in this example, each pixel PX has a color filter 230 for one of the primary colors in a region of upper panel 200 corresponding to pixel electrode 191. Unlike FIG. 2, color filter 230 may be formed above or below pixel electrode 191 of lower panel 100.

Difference between data voltage applied to pixel electrode 191 and common voltage applied to common electrode 270 is represented as charge voltage, i.e., pixel voltage. Liquid crystal molecules are aligned differently depending on the magnitude of pixel voltage, and accordingly polarization of light passing through liquid crystal layer 3 varied, and variation of polarization causes variation of transmittance of light according to polarizers 12 and 22.

A method for manufacturing a liquid crystal display panel having a desired size by cutting and fabricating the above-described liquid crystal display panel will be described with reference to FIG. 3 to FIG. 5.

FIG. 3 is a cross sectional view of a liquid crystal display panel of a state in which polarizers are stripped and then scribe lines are formed in a liquid crystal display panel of FIG. 1.

Referring to FIG. 3, liquid crystal display 300 may be cut along a cutting line A or a cutting line B according to a desired size. The cutting line A is parallel with gate line 121, and the cutting line B is parallel with data line 171. Cutting method can be applied in the same way whenever liquid crystal display 300 is cut in both directions.

At first, polarizers 12 and 22 of liquid crystal display 300 are stripped by a predetermined width along a direction A or B. If polarizers 12 and 22 are stripped, lower panel 100 and upper panel 200 are exposed. Subsequently, a cutting position is selected by inspecting exposed lower and upper panels 100 and 200 with a microscope or the like.

Subsequently, a first scribe line 290 may be made approximately to a center depth of upper panel 200 along the selected cutting position using a diamond wheel, a diamond needle, a laser or the like, and then liquid crystal display 300 may be turned over and a second scribe line 190 may be made approximately to a center depth of lower panel 100.

At this time, according to an embodiment of the present invention, step between the cut surface of upper panel 200 to which color filter 230 is formed and the cut surface of lower panel 100 to which thin film transistors are formed, so that the total cut surface is formed as a stepped surface, and the step is formed such that the cut surface of upper panel 200 is protruded from the cut surface of lower panel 100 to the outside. For example, the gap d between the cut edges of upper panel 200 and lower panel 100 may be between 0.2 to 0.5mm. As such, since the cut edge of upper panel 200 is outwardly protruded from the cut edge of lower panel 100, electrodes, signal lines, and thin film transistors which are formed on lower panel 100 can be prevented from being damaged during the process of forming the sealant. That is, since the cut edge of upper panel 200 is outwardly protruded from the cut edge of lower panel 100, the signal lines or the thin film transistors of lower panel 100 can be prevented from being damaged by the contact with an end portion of a dispenser spraying sealant or by the pressure of the sealant.

Upper panel 200 and lower panel 100 are steadied for about 30 minutes in a state that the scribe lines are formed. Natural crack is formed along the scribe lines formed in two panels 100 and 200 during steadying, so air is introduced into liquid crystal layer 3, and if air is introduced into liquid crystal layer 300, leak of liquid crystal layer 3 is temporarily restricted by the introduced air.

After such a steadying step, if a predetermined force is applied from the outside, liquid crystal display 300 is cut along the scribe lines. A sealant 320 is covered on the cut portion so as to prevent leak of liquid crystal from the cut portion.

At this time, as shown in FIG. 3, liquid crystal display panel in which scribe lines 290 and 190 are formed is put on a work stage 500 in a state of being turned over such that lower panel 100 is positioned above upper panel 200, and in this sate external force is applied to break lower panel 100 and upper panel along scribe lines 290 and 190. While applying external force, liquid crystal display panel can be fixed by its own weight even when it is not pressed by another device or hand of a worker.

Meanwhile, according to an embodiment of the present invention, after forming scribe lines 290 and 190, external force is applied on the liquid crystal display at a portion outer scribe lines 290 and 190, and external force is applied in a direction to urge lower panel 100 to be bent toward an outer surface thereof (i.e., in an upper direction in FIG. 3 and FIG. 4). That is, referring to FIG. 4, external force is applied to the liquid crystal display panel at a portion thereof outer scribe lines 290 and 190 along an arrow direction from upper panel 200 to lower panel 100, and accordingly upper panel 200 and lower panel 100 are bent from an original state (shown in a dotted line) to a state shown in a solid line and are broken and then returned to the original state.

Accordingly, spacer 250 which is patterned on a lower surface of upper alignment layer 240 of upper panel 200 is deformed from an original state (shown in a dotted line) to a state shown in a solid line and then returns to the original state. That is, since an upper end portion of spacer 250 is fixed to upper alignment layer 240, the upper end portion of spacer 250 which contacts upper alignment layer 240 is not deformed by the deformation of upper panel 200, and on the other hand, since a lower end portion of spacer 250 is not fixed to but contacts lower alignment layer 140, the lower end portion of spacer 250 is deformed to incline toward the outside (i.e., toward the cut surface).

That is, when external force is applied to break upper panel 200 and lower panel 100 after forming scribe lines 290 and 190, external force is applied in a direction to urge lower panel 100 to be bent toward an outer surface thereof, an end portion of spacer 250 contacting lower alignment layer 140 is deformed to be inclined toward the outside i.e., the cut surface. Accordingly, an outer portion (portion at the right side of deformed spacer 250 in FIG. 4) of lower alignment layer 140 of lower panel 100 about spacer 250 which is disposed nearest the cut surface is damaged by the deformation of spacer 250, but an inner portion thereof is not damaged by the deformation of spacer 250. Since an outer portion (portion at the right side of deformed spacer 250 in FIG. 4) is not used as a viewing area in a liquid crystal display panel which will be obtained by being cut, although the corresponding portion of lower alignment 140 is damaged by the deformation of spacer 250, an alignment layer which will belong to the viewing area of a liquid crystal display panel which will be obtained by being cut is not damaged. To the contrary, if the upper panel and the lower panel are broken by applying external force in a direction opposite to the direction of an embodiment of the present invention, the spacer is deformed to incline toward an opposite direction, so a portion of the lower alignment layer which belongs to a viewing area of a liquid crystal display panel which will be obtained after being cut may be damaged by the deformation of the spacer, and accordingly the damage of the lower alignment layer in the viewing area may cause light leakage problem and an error in a liquid crystal display panel.

Subsequently, as shown in FIG. 5, after breaking upper panel 200 and lower panel 100 by applying external force in a direction as shown in FIG. 4, a sealant 320 enclosing the cut portion is formed using a dispenser 400 spraying the sealant 320.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A method for cutting a liquid crystal display panel which includes an upper panel and a lower panel, comprising:
forming scribe lines on the upper panel and the lower panel respectively along a cutting direction; and
breaking the upper panel and the lower panel by applying an external force at an outside of the scribe lines in a direction to urge the lower panel to be bent toward an outer surface thereof.

2. The method of claim 1, wherein in the forming the scribe lines, the scribe lines are respectively formed such that a cut edge of the upper panel is outwardly protruded from a cut edge of the lower panel.

3. A method for cutting a liquid crystal display panel which includes a lower panel, a lower alignment layer which is formed on the lower panel, an upper panel, an upper alignment layer which is formed below the upper panel, and a spacer which is formed on a lower surface of the upper alignment layer by being patterned thereon such that a lower end thereof contacts the lower alignment layer,
wherein scribe lines are formed on the upper panel and the lower panel respectively along a cutting direction, and subsequently the upper panel and the lower panel is broken by applying an external force at an outside of the scribe lines in a direction to urge the lower panel to be bent toward an outer surface thereof.

4. The method of claim 3, wherein the scribe lines are respectively formed such that a cut edge of the upper panel is outwardly protruded from a cut edge of the lower panel.
